# EUROPEAN PATENT SPECIFICATION

(11) **EP 4 551 516 B1**
(45) Date of publication and mention of the grant of the patent: **25.11.2026**
(21) Application number: 23734695.2
(22) Date of filing: 05.07.2023
(51) Int. Cl.: C01C 1/00, B65D 5/42, F17C 13/12, B65D 90/10, B65D 90/34

(54) **CONTAINER FOR HOLDING AQUEOUS SOLUTIONS COMPRISING AMMONIA**
BEHÄLTER ZUM AUFNEHMEN VON AMMONIAK UMFASSENDEN WÄSSRIGEN LÖSUNGEN
RÉCIPIENT POUR CONTENIR DE SOLUTIONS AQUEUSES COMPRENANT DE L'AMMONIAC

(30) Priority: 05.07.2022 EP 22183078
(43) Date of publication of application: 14.05.2025
(73) Proprietor: Yara International ASA, 0277 Oslo (NO)
(72) Inventor: PORRO, Lino Giovanni, 1040 Etterbeek (BE); NYSTAD BYNES, Adrian, 9032 Wondelgem (BE)
(74) Representative: De Clercq & Partners
(86) International application number: PCT/EP2023/068480
(87) International publication number: WO 2024/008767

(56) References cited:
- CN-U- 208 591 577
- US-A1- 2009 301 112
- VENKAT PATTABATHULA ET AL: "The safety and intergrity of ammonia storage tanks", NITROGEN + SYNGAS, BRITISH SULPHUR PUBLISHING, LONDON, GB, no. 321, 1 January 2013 (2013-01-01), pages 29 - 32, 34, XP001581845, ISSN: 1750-6891

## Description

### Field of the invention

The present disclosure is related to the field of chemical engineering, in particular the field of chemical containers.

### Background of the invention

Industrial plants, such as fertilizer-producing plants, in particular urea-producing plants, and ammonia-producing plants, produce aqueous streams comprising various chemicals in their operation. These streams may be re-used in the production process, or processed to extract some of the chemicals dissolved therein.

Ammonia (NH₃) is a chemical used in various industrial processes, such as the production of fertilizer. Today, most ammonia is produced on a large scale by reacting nitrogen gas and hydrogen gas at pressures of 200 bar. Ammonia can be transformed into urea, nitric acid and/or ammonium nitrate. Therefore, a plant producing any one of urea, nitric acid, ammonia, and/or ammonium nitrate is producing aqueous streams comprising ammonia. Sometimes, the streams comprising ammonia are directly re-used or processed, but in other cases, it is preferred to store the aqueous solutions comprising ammonia in a tank or container. Such aqueous solutions can be kept for a period of time until it is further processed or re-used.

Ammonia is a flammable gas and containers configured for holding aqueous solutions comprising ammonia need to respect certain safety rules. Nonetheless, fires in containers holding aqueous solutions have been observed in the past, meaning that the current safety rules are not enough.

There is thus a need to increase the safety of containers configured to hold an aqueous solution comprising ammonia.

CN 208 591 577 U discloses a storage tank for aqueous ammonia. The tank comprises a manhole and a vent hole at the apex of the tank.

### Summary of the invention

It was found that a way to increase the safety of a container for holding aqueous solutions comprising ammonia was to install a ventilation line or purging line between each hatch present in the container and the main ventilation line of the container, thus connecting each hatch of the container to the main ventilation line of the container.

In one aspect, the present disclosure provides a container for holding an aqueous solution comprising ammonia, comprising a main ventilation line at the apex of the container and a hatch, wherein the container comprises a secondary ventilation line fluidly connecting the hatch to the main ventilation line.

In another aspect, the present disclosure provides a method for increasing the safety of a container configured for holding an aqueous solution comprising ammonia, wherein the container comprises a hatch and a main ventilation line, comprising the step of fluidly connecting the hatch to the main ventilation line with a secondary ventilation line.

In another aspect, the present disclosure provides a method for reducing the fire hazard in a container configured for holding an aqueous solution comprising ammonia, wherein the container comprises a hatch and a main ventilation line, comprising the step of fluidly connecting the hatch to the main ventilation line with a secondary ventilation line.

### Brief description of the figures

The following description of the figure of a specific embodiment of a system according to the present disclosure is only given by way of example and is not intended to limit the present explanation, its application or use. In the figure, identical reference numerals refer to the same or similar parts and features.
Figure 1 shows a conventional container for storing an aqueous solution comprising ammonia in a fertilizer-producing plant or an ammonia-producing plant.
Figure 2 shows an embodiment of a container according to the present disclosure.
Figure 3 shows another embodiment of a container according to the present disclosure.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The apex of a structure is the top or highest point of the structure.

A "hatch" refers to any device installed on a container and creating a local high point, meaning that any gas trapped inside a hatch cannot reach higher. A "hatch" may refer to a circular, square or rectangular device creating a local high point design with the intention of the entry into the container of any body part, such as an arm or the entire body, partially or completely. This type of hatch may also be called "manhole" or "handhole". This type of hatch comprises a wall connected to the container, particularly a circular, square or rectangular wall, and a lid connected to the wall. The lid comprises an element that can be opened such that the operator can access the inside of the container. A "hatch" may also refer to a circular, square or rectangular device with a liquid seal between the atmosphere and the volatile components present inside the container. This type of hatch comprises a first outer wall connected to the container, particularly a circular, square or rectangular first outer wall, a second inner wall also connected to the container, the second inner wall being concentric with the first outer wall, thus creating a secondary container with an open top and configured to hold a liquid, such as water. This hatch comprises a lid connected to a third wall, the third wall is placed between the first outer wall and the second inner wall. This type of hatch may also be called a water seal/lock or liquid seal/lock.

In one aspect, the present disclosure provides a container for holding an aqueous solution comprising ammonia, in particular ammonia and hydrogen, more in particular comprising ammonia and low levels of hydrogen, wherein the container comprises a main ventilation line at the apex of the container and a hatch, wherein the container comprises a secondary ventilation line between the hatch and the main ventilation line, in particular the secondary ventilation line fluidly connecting the hatch to the main ventilation line.

It was found that aqueous ammonia solutions, such as these produced in a urea-producing plant, often contain low levels of hydrogen gas, for example less than 100 ppm, less than 50 ppm, less than 10 ppm or from 0.1 to 100 ppm. Hydrogen gas is a very flammable gas, prone to explosion.

Even if an aqueous solution comprising ammonia only comprises a few ppm of hydrogen gas, the gas can escape from the solution over time and accumulate in a storage container, in particular in the local high point of a hatch of a storage container, thus increasing the risk of a fire.

Hydrogen gas has the lowest density of all gases regularly used in an industrial plant. Its density is about 0.1 kg/m³ at 20 °C and atmospheric pressure, which is much lower than gases such as nitrogen (1.2 kg/m³), ammonia (0.7 kg/m³), carbon dioxide (1.8 kg/m³), water steam (0.8 kg/m³), and oxygen (1.3 kg/m³), which are commonly found in industrial plants, such as fertilizer-producing plants.

This means that, in a container comprising different gases including hydrogen, a high concentration of hydrogen is found at the top of the container or under the lid of hatches present in the container.

However, it was found that the dangerous accumulation of hydrogen gas in a hatch can be prevented by a secondary ventilation line fluidly connecting the hatch to the main ventilation line. The secondary ventilation line ensures that any hydrogen gas evaporating from the aqueous solution being held in the container can be evacuated to the main ventilation line and does not accumulate under the lid of the hatch.

A hatch may perform different tasks when present in a container: a manhole- or handhole-type hatch allows an operator to enter completely or partially into the container; a liquid seal-type hatch ensures that the pressure inside the container remains in an interval of pressure around atmospheric pressure in operation. For example, a liquid seal-type hatch may be configured to maintain the internal pressure of from -50 to +200 mm of water column.

Containers designed to hold solutions containing gases dissolved in the solutions always comprise a main ventilation line located at the apex of the container to ensure that no accumulation of toxic and/or inflammable gases occurs in the container. However, the situation at the hatches, i.e. the accumulation of toxic and/or inflammable gases under the hatch, has been neglected so far. Typically, a hatch has a diameter of from 10 to 120 cm, and a height of from 5 to 50 cm. While the volume of gas that can accumulate in that space is quite small, in case a gas as dangerous as hydrogen is trapped there, it can still create a substantial explosion risk.

In some embodiments, the hatch is circular and has a diameter of from 10 to 120 cm. In some embodiments, the hatch is rectangular or square, and its diagonal has a length of from 10 to 120 cm.

To eliminate or at least reduce the explosion risk, the hatch needs to be equipped with a secondary ventilation line. The secondary ventilation line ensures that any hydrogen that reaches the lid or high point of the hatch continues to rise to the main ventilation line. Such ventilation line does not modify the performance or role of the hatch that can be used.

In one embodiment, the container comprises two or more hatches, and one secondary ventilation line connected to each of the two or more hatches fluidly connecting each hatch to the main ventilation line. If a container has two or more hatches, each hatch needs a secondary ventilation line fluidly connecting the hatch to the main ventilation line. The secondary ventilation lines may be connected to each other downstream, i.e. before, according to the flow of the gases, of the connection to the main ventilation line.

In some embodiments, the container comprises a roof with a conical or hemispherical shape. A container for chemical substances may have a roof with two main geometries: a conical roof or a hemispherical roof. Both types of container roof can be equipped with one or more hatches.

In some embodiments, the secondary ventilation line is removably attached to the hatch. It may be an advantage that the secondary ventilation line can be easily disconnected from the hatch. The secondary ventilation line may prevent the operator to open the hatch, so having a removable attachment to the hatch allows the operator to disconnect the secondary ventilation line from the hatch before opening the hatch.

In another aspect, the present disclosure provides a method for increasing the safety of a container configured for holding an aqueous solution comprising ammonia, wherein the container comprises a hatch and a main ventilation line, comprising the step of fluidly connecting the hatch to the main ventilation line with a secondary ventilation line.

In another aspect, the present disclosure provides a method for reducing the fire hazard in a container configured for holding an aqueous solution comprising ammonia, wherein the container comprises a hatch and a main ventilation line, comprising the step of fluidly connecting the hatch to the main ventilation line with a secondary ventilation line.

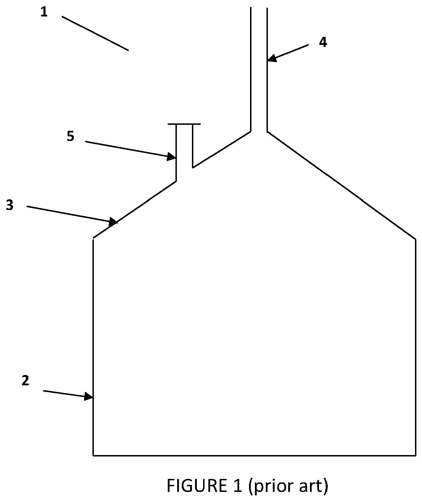

Figure 1 shows a conventional container 1 for storing an aqueous solution comprising ammonia in a fertilizer-producing plant. The container 1 comprises walls 2, and a roof 3 with a conical shape. A ventilation line 4 is located at the apex of the roof 3 to ensure that free gases can exit the container and do not accumulate in the container. The container comprises a hatch 5. It can be seen that, in case if hydrogen gas rises up from the aqueous solution to the hatch 5, it cannot escape the space under the lid and accumulates there.

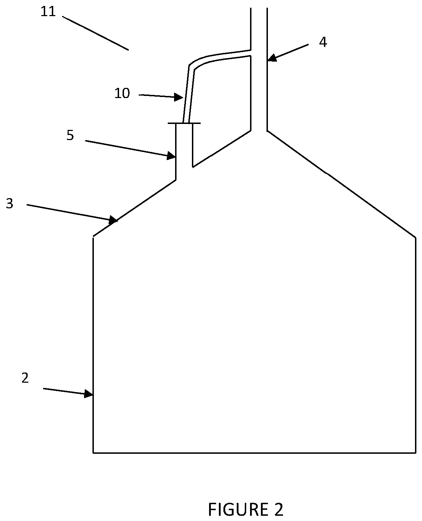

Figure 2 shows an embodiment of a container 11 according to the present disclosure. Like the conventional container 1, this container **11** comprises walls 2, a roof 3 with a conical shape, a ventilation line 4 and a hatch 5. In addition, the container 11 comprises a secondary ventilation **10** connecting the hatch **5** to the main ventilation line **4,** such that any hydrogen rising from the solution to the hatch **5** can reach the main ventilation line **4.**

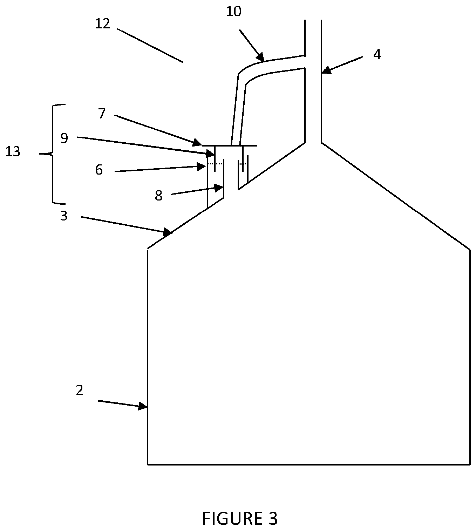

Figure 3 shows another embodiment of a container **12** according to the present disclosure. Like the conventional container **1,** this container **12** comprises walls **2,** a roof **3** with a conical shape, a ventilation line **4** and a hatch **13.** The hatch **13** is a liquid-seal hatch, and comprises a lid **7,** a first outer wall **6,** a second inner wall **8,** and a third wall **9** connected to the lid **7.** The dotted line shows the liquid level between the walls of the hatch **13** in operation. The container **12** comprises a secondary ventilation line **10** connecting the hatch **13** to the main ventilation line **4,** such that any hydrogen rising from the solution to the hatch **13** can reach the main ventilation line **4.**

## Claims

1. A container for holding an aqueous solution comprising ammonia, the container comprising a main ventilation line at the apex of the container and a hatch, **characterized in that** the container further comprises a secondary ventilation line fluidly connecting the hatch to the main ventilation line.

2. The container according to claim 1, wherein the hatch is a manhole or a handhole.

3. The container according to claim 1 or 2, wherein the hatch is a water seal or liquid seal.

4. The container according to any one of claims 1 to 3, wherein the container comprises two or more hatches, wherein each hatch is fluidly connected to the main ventilation line by a secondary ventilation line.

5. The container according to any one of claims 1 to 4, wherein the secondary ventilation line is removably attached to the hatch.

6. A method for increasing the safety of a container configured for holding an aqueous solution comprising ammonia, wherein the container comprises a hatch and a main ventilation line, comprising the step of fluidly connecting the hatch of the container to the main ventilation line with a secondary ventilation line.

7. The method according to claim 6, wherein the method is a method for reducing the fire hazard in a container configured for holding an aqueous solution comprising ammonia.

## Patentansprüche

1. Behälter zum Halten einer wässrigen Lösung, die Ammoniak umfasst, wobei der Behälter eine Haupt-Lüftungsleitung an dem Scheitel des Behälters und eine Luke umfasst, **dadurch gekennzeichnet, dass** der Behälter ferner eine sekundäre Lüftungsleitung umfasst, die die Luke mit der Haupt-Lüftungsleitung fluidisch verbindet.

2. Behälter nach Anspruch 1, wobei die Luke ein Mannloch oder ein Handloch ist.

3. Behälter nach Anspruch 1 oder 2, wobei die Luke eine Wasserdichtung oder Flüssigkeitsdichtung ist.

4. Behälter nach einem der Ansprüche 1 bis 3, wobei der Behälter zwei oder mehr Luken umfasst, wobei jede Luke durch eine sekundäre Lüftungsleitung mit der Haupt-Lüftungsleitung fluidisch verbunden ist.

5. Behälter nach einem der Ansprüche 1 bis 4, wobei die sekundäre Lüftungsleitung lösbar an der Luke angebracht ist.

6. Verfahren zum Erhöhen der Sicherheit eines Behälters, der zum Halten einer wässrigen Lösung, die Ammoniak umfasst, ausgelegt ist, wobei der Behälter eine Luke und eine Haupt-Lüftungsleitung umfasst, umfassend den Schritt des Fluidverbindens der Luke des Behälters mit der Haupt-Lüftungsleitung über eine sekundäre Lüftungsleitung.

7. Verfahren nach Anspruch 6, wobei das Verfahren ein Verfahren zum Verringern der Brandgefahr in einem Behälter ist, der zum Halten einer wässrigen Lösung, die Ammoniak umfasst, ausgelegt ist.

## Revendications

1. Récipient destiné à contenir une solution aqueuse comprenant de l'ammoniac, le récipient comprenant une conduite de ventilation principale au sommet du récipient et une trappe, **caractérisé en ce que** le récipient comprend en outre une conduite de ventilation secondaire raccordant fluidiquement la trappe à la conduite de ventilation principale.

2. Récipient selon la revendication 1, dans lequel la trappe est un trou d'homme ou un trou de main.

3. Récipient selon la revendication 1 ou 2, dans lequel la trappe est un joint hydraulique ou un joint d'étanchéité aux liquides.

4. Récipient selon l'une quelconque des revendications 1 à 3, dans lequel le récipient comprend deux trappes ou plus, dans lequel chaque trappe est raccordée fluidiquement à la conduite de ventilation principale par une conduite de ventilation secondaire.

5. Récipient selon l'une quelconque des revendications 1 à 4, dans lequel la conduite de ventilation secondaire est fixée à la trappe de façon amovible.

6. Procédé pour augmenter la sécurité d'un récipient configuré pour contenir une solution aqueuse comprenant de l'ammoniac, dans lequel le récipient comprend une trappe et une conduite de ventilation principale, comprenant l'étape du raccordement fluidique de la trappe du récipient à la conduite de ventilation principale par une conduite de ventilation secondaire.

7. Procédé selon la revendication 6, dans lequel le procédé est un procédé pour réduire le risque d'incendie dans un récipient configuré pour contenir une solution aqueuse comprenant de l'ammoniac.
